# EUROPEAN PATENT SPECIFICATION

(11) **EP 0 385 804 B1**
(45) Date of publication and mention of the grant of the patent: **28.05.1997**
(21) Application number: 90302264.8
(22) Date of filing: 02.03.1990
(51) Int. Cl.: H04M 3/24

(54) **Network termination equipment**
Netzwerkendgerät
Equipement de terminaison de réseau

(30) Priority: 03.03.1989 JP 51273/89
(43) Date of publication of application: 05.09.1990
(73) Proprietor: NIPPON TELEGRAPH AND TELEPHONE CORPORATION, Shinjuku-ku, Tokyo 163-19 (JP)
(72) Inventor: Kumozaki, Kiyomi, Yokohama-shi, Kanagawa 233 (JP); Yamano, Seiichi, Kanagawa 238-03 (JP); Komiya, Ryoichi, Kanagawa 239 (JP)
(74) Representative: Darby, David Thomas

(56) References cited:
- EP-A- 0 202 648
- US-A- 4 730 313

## Description

### [Technological Field]

This invention relates to an integrated services digital network (ISDN), and more particularly to an network termination equipment (NT1) which terminates a subscriber line to provide an ISDN basic user-network interface for terminal equipments. Further in particular, this invention relates to loopback test for NT1.

### [Background Technology]

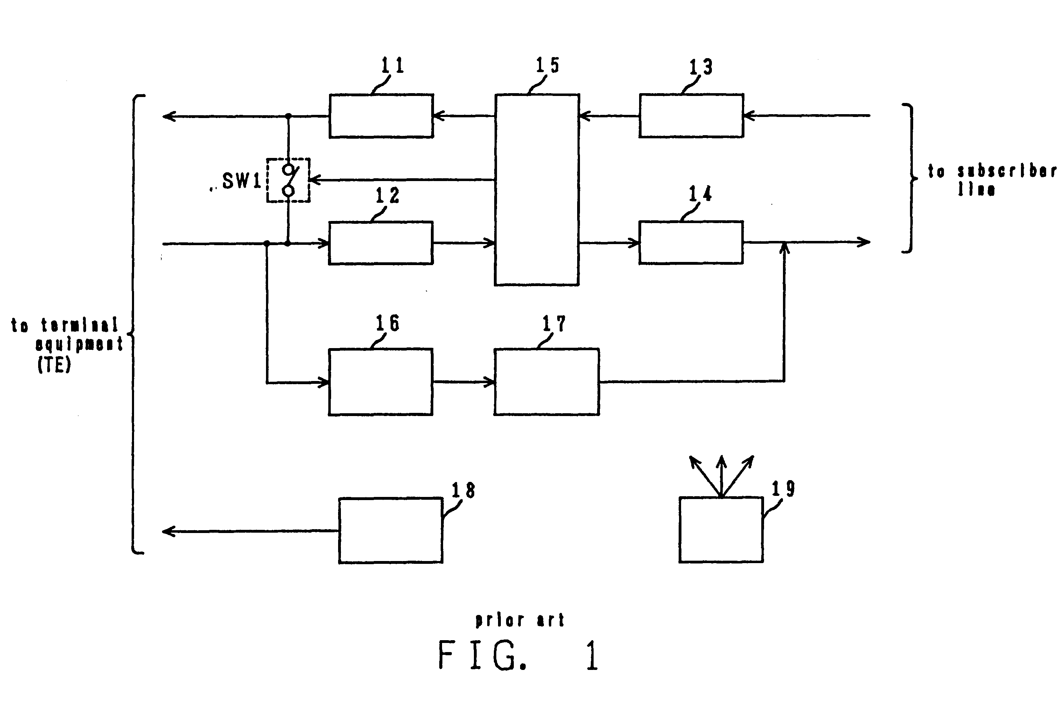

FIG. 1 is a block diagram to show a conventional NT1.

The equipment comprises a transmitter circuit 11 and a receiver circuit 12 on the side of a terminal equipment, a receiver circuit 13 and a transmitter circuit 14 on the side of a subscriber line, a circuit termination 15, a call origination signal detector 16, a call origination signal transmitter 17, a power feeder 18 and a power unit 19.

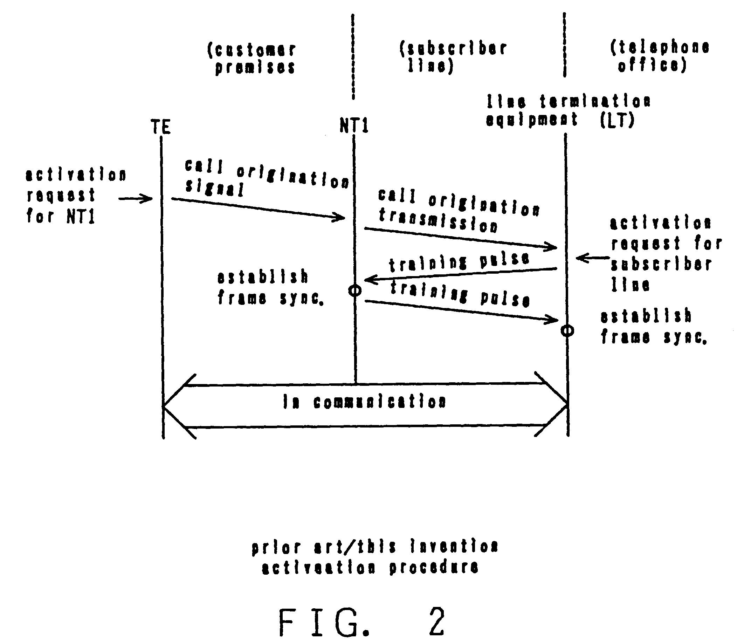

FIG. 2 is a sequence chart to show operations when the equipment is activated.

When an activation request for NT1 is made at a terminal equipment, the equipment transmits a call origination signal to the NT1. The call origination signal detector 16 in the NT1 detects the signal and feeds a detection output to the call origination signal transmitter 17. The circuit 17 transmits a call origination signal to the line termination equipment at the telephone office via a subscriber line. The call origination may be notified by closing the loop on a subscriber line or transmitting a tone signal.

The line termination equipment at the telephone office originates an activation request for a subscriber line when it receives a call origination signal, and transmits training pulses to the NT1. The receiver 13 conducts adaptive line equalization when it receives the pulses. When equalization ends and when frame synchronization is established by the circuit 15, the transmitter 14 transmits training pulses to the equipment at the telephone office. When adaptive line equalization is completed at the office equipment and the frame synchronization is established, the activation of subscriber line is completed to start communication.

In the case when it is activated by an incoming call of a caller, the activation procedure starts from the stage of the activation request for subscriber line shown in FIG. 2.

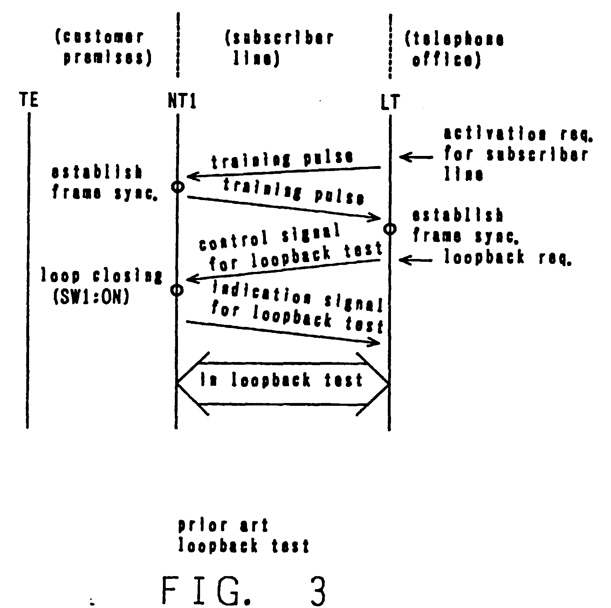

FIG. 3 shows the activation sequence at the time of a loopback test.

The line termination equipment at the telephone office transmits training pulses to the NT1 upon request of activation for subscriber line, and the NT1 in its turn transmits training pulses to the equipment at the office after having established the frame synchronization.

The equipment at the office transmits a control signal for loopback test to the NT1 by using control bits out of the frame structure on the subscriber line after having established the frame synchronization.

When the circuit termination 15 detects a control signal of loopback test, it transmits an SW1 driving signal to a switch SW1 for the loopback to close the loop by turning on the switch SW1. Then, the circuit 15 sends to the equipment at the office an indication signal of loopback test by using control bits out of the frame structure on the subscriber line.

The equipment at the office recognizes completion of closing of the loop for loopback at the NT1 by receiving the indication signal, and measures a bit error rate on the loopback path.

As stated above, the conventional NT1 closes a loop by the control from the equipment at the office to test the loopback path. By such a test, it can verify the operations of transmitting/receiving lines both at the sides of the subscriber line and the terminal equipment of the NT1, the circuit terminations, and the power unit which supplies power to the above circuits.

These operations are controlled by the circuit termination 15. In order to facilitate understanding, description will now be given to the operation of the circuit 15.

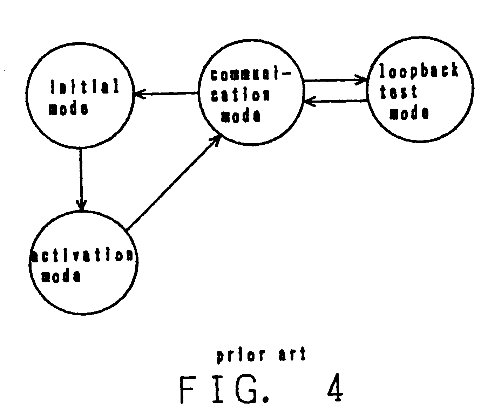

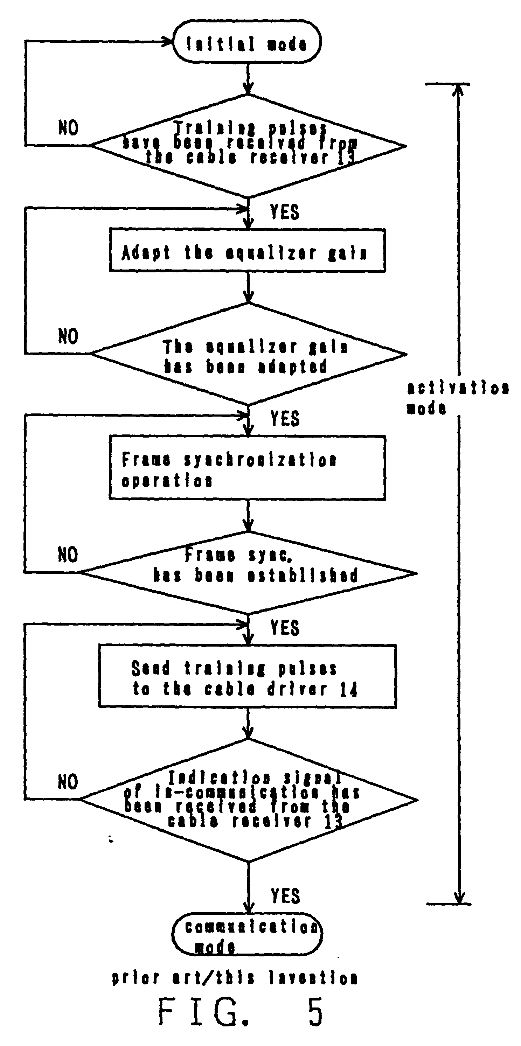

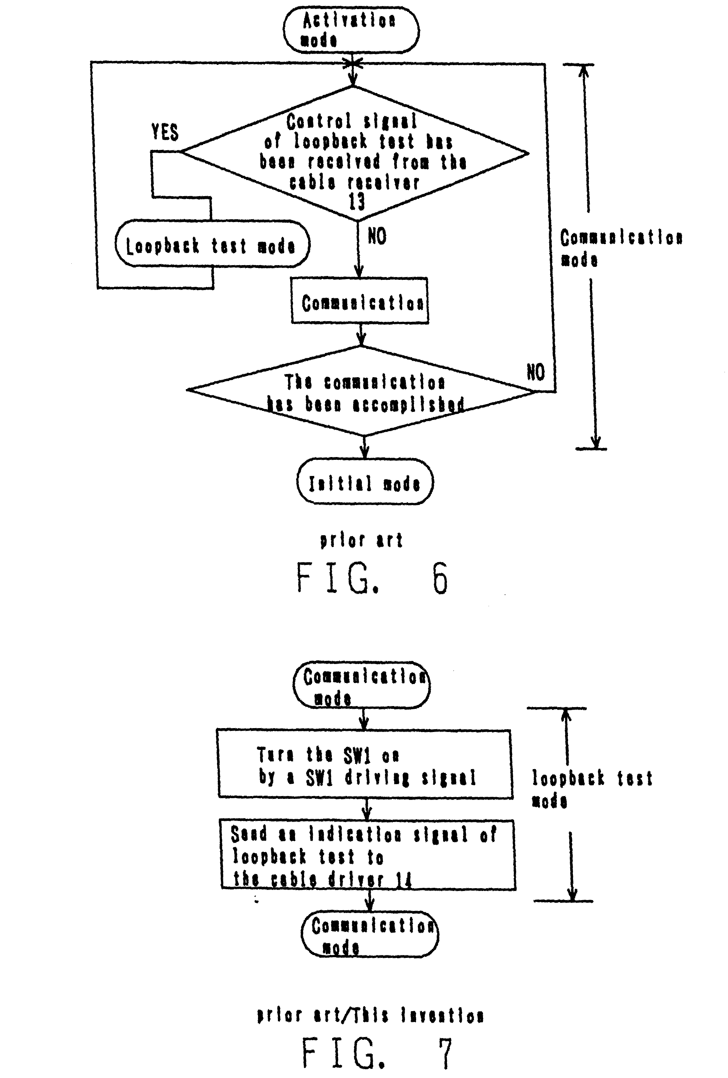

The circuit 15 has four modes of initial mode, activation mode, communication mode, and loopback test mode. FIG. 4 shows the relation among these modes, and FIGs. 5 through 7 respectively the operation flows of the above four modes.

In the initial mode, the circuit 15 does not send out signals to the circuits 11 and 14, but waits for training pulses from the line termination equipment at the telephone office. When the training pulses arrive from the equipment at the office in the initiation sequence as shown in FIG. 2, the operation of the circuit 15 is shifted from the initial mode to the activation mode, and then to the communication mode.

In the communication mode, the circuit 15 executes a call between the terminal equipment and the line termination equipment at the telephone office. When the call is completed, the mode of the circuit 15 is shifted from the communication mode to the initial mode. When a control signal of loopback test arrives from the equipment at the office during the communication mode, the circuit 15 is shifted to the loopback test mode, and when the test ends, it is returned to the communication mode again.

The loopback test of the NT1 is intended to test the functions and performance of the NT1. The conventional system, however, cannot test the call origination signal detector and the call origination transmitter which alert the line equipment to a call from the terminal equipment. Moreover, the conventional system cannot verify the operation of the power feeder which supplies the power to the terminal equipment.

United States Patent No. 4 730 313 discloses an apparatus for performing diagnostic operations on an ISDN by monitoring error performance on the ISDN D-channel and treating the D-channel error performance as representing the performance of the B-channel, the apparatus being capable of performing loopback tests, alerts or network reconfiguration when the number of errors detected on the D-channel exceeds a specific threshold.

This invention seeks to overcome defects such as are encountered in the prior art systems and aims at providing a NT1 which can test both a circuit that operates when the NT1 is activated by an incoming call from the terminal equipment and the power feeder which supplies power to the terminal equipment.

The invention provides network termination equipment, for an integrated services digital network, including means for providing a connection route between terminal equipment and line equipment that is capable of instructing the network termination equipment to execute a test, including a loopback test, on the connection route, the network termination equipment including call origination alert means which, in operation, alerts the line equipment to a call origination signal from the terminal equipment, characterised in that the network termination equipment includes call origination signal generator means for triggering the call origination alert means and includes circuit termination means which is capable of responding initially to an instruction from the line equipment to test the connection route by causing the call origination signal generator means to apply a signal to the call origination alert means in order to test the call origination alert means.

In one form of the network termination equipment the call origination signal generator means is included within modified circuit termination means which is capable of responding initially to an instruction from the line equipment to test the connection route by causing the call origination signal generator means to apply a signal to the call origination alert means in order to test the call origination alert means.

In one form of the network termination equipment the modified circuit termination means is connected directly to the call origination alert means.

In an alternative form of the network termination equipment an additionally modified circuit termination means is connectible to the call origination alert means by way of a transmitter circuit belonging to the connection route and a switch positioned for use in the loopback test.

In another form of the network termination equipment the call origination alert means is connected to a further-modified circuit termination means which is capable of indicating the receipt of a signal from the call origination alert means using status indication bits within a subscriber line frame.

Preferably, in the network termination equipment, the call origination alert means is connected to be energised by a power feeder used to energise the terminal equipment and an isolating switch is included for disconnecting the power feeder from the terminal equipment during testing of the connection route.

In the accompanying drawings:

FIG, 1 is a block diagram of a conventional NT1.

Fig. 2 is a chart representing a sequence of operations performed at the time of activation by either the conventional equipment or by equipment in accordance with his invention.

FIG. 3 shows a chart representing a sequence of operations for a loopback test performed by prior art equipment.

FIG. 4 is a chart representing the various operational modes of prior art circuit termination equipment.

FIG. 5 is a flow chart representing a sequence of operations performed in the activation mode by either the prior art equipment or equipment in accordance with this invention.

FIG. 6 is a flow chart of a conventional circuit termination in the communication mode.

FIG. 7 is a flow chart of a circuit termination in the loopback test mode which can be used commonly both by the prior art equipment and this invention equipment.

FIG. 8 is a block diagram to show the first embodiment of this invention NT1.

FIG. 9 shows an activation sequence for the loopback test of the first embodiment.

FIG. 10 is a chart to show the flow among modes of a circuit termination which is used to realize this invention.

FIG. 11 is a flow chart in the communication mode of the circuit termination.

FIG. 12 is a flow chart of a circuit termination in the call origination function test mode of the first embodiment.

FIG. 13 shows an embodiment of a generator of a call origination signal together with a call origination signal detector.

FIG. 14 is a block diagram to show the second embodiment of an NT1 according to this invention.

FIG. 15 is a block diagram to show the third embodiment of an NT1 according to this invention.

FIG. 16 shows an activation sequence of a loopback test in the third embodiment.

FIG. 17 is a flow chart of a circuit termination in the third embodiment in the call origination function test mode.

FIG. 18 is a block diagram of the fourth embodiment of an NT1 NT1 according to this invention.

FIG. 19 is an activation sequence of a loopback test in the fourth embodiment.

FIG. 20 is a flow chart of the circuit termination in the fourth embodiment in the call origination function test mode.

FIG. 21 is a block diagram of the fifth embodiment of an NT1 according to this invention.

### [The Optimal Mode to Realize the Invention]

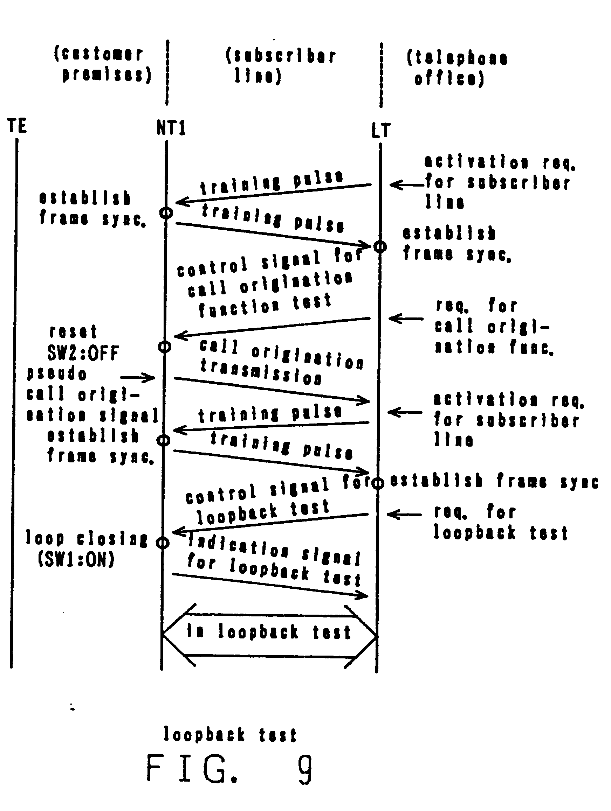

FIG. 8 shows in a block diagram the first embodiment of an NT1 according to this invention.

The equipment includes a call origination detector 16 which detects a call origination signal from the terminal equipment, a call origination transmitter 17 which transmits the information on the call or origination detected by the detector 16 to the line termination equipment at the telephone office of an ISDN, and a power feeder 18 which supplies power to the terminal equipment at the customer premises, and further includes a circuit termination 115 and a switch SW1 as a means for sending back a transmitted signal as a loopback control signal from the office. It further includes a transmitter 11 which transmits signals to the terminal equipment, a receiver 12 which receives signals from the terminal equipment, a receiver 13 which receives signals from the subscriber lines, and a transmitter 14 which transmits signals to the subscriber line. It also includes a power unit 19 which feeds power to respective circuits.

This invention NT1 is characterized in that it comprises a call origination signal generator 21 as a means which generates pseudo-call origination signals to the detector 16 and the transmitter 17, that the output from the power feeder 18 is connected to the call origination detector 16 in order to verify the normal operation of the power unit, and that there is further provided a means which executes a loopback test only on the condition that the pseudo-call origination signal has duly been transmitted.

The generator 21 outputs a call origination signal to the detector 16. The detector 16 is supplied with the output from the power feeder 18.

The operation at the time of activation of the NT1 is identical to those described in relation to FIG. 2.

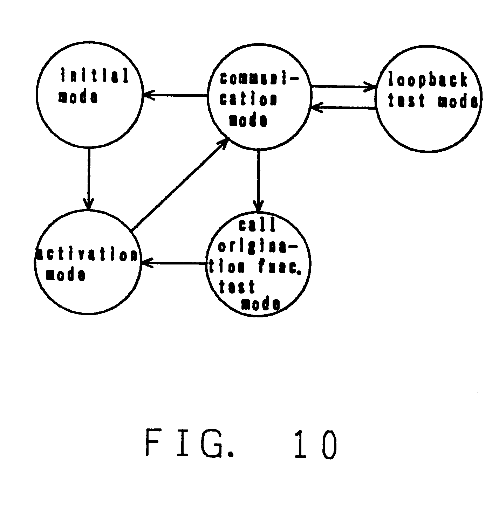

FIG. 9 shows an activation sequence for the loopback test.

The equipment at the telephone office sends out training pulses to the NT1 upon request for subscriber line activation. The NT1 transmits the training pulses to the equipment at the office after having established a frame synchronization.

The equipment at the office transmits a call origination function test control signal to the NT1 by using control bits out of the frame of the subscriber line after having established the frame synchronization. The circuit termination 115 resets the whole circuits of the NT1 to the initialized state when it detects a call origination function test control signal and suspends all operations. Simultaneously, the circuit 115 opens the switch SW2 by outputting an SW2 driving signal so as to prevent the power feeder 18 from being affected by a failure on the terminal equipment.

Subsequently, the generator 21 outputs a call origination signal to the detector 16. When the detector 16 receives the signal, it executes the activation sequence shown in FIG. 2. In other words, the detector 16 transmits the detection output to the transmitter 17 when it detects a call origination signal. The transmitter 17 transmits a call origination signal to the equipment at the office via a subscriber line. This transmission is not an authentic one but a psuedo one, and it may be executed by closing a loop on the subscriber line or sending out a tone signal.

When the equipment at the telephone office receives the transmitted call origination signal, it sends out training pulses to the NT1 upon request for activation of the subscriber line. The receiver 13 conducts an adaptive line equalization when it receives the training pulses. Upon completion of the adaptive line equalization and establishment of a frame synchronization, the transmitter 14 transmits training pulses to the equipment at the office.

The subscriber line is fully activated by the completion of adaptive line equalization and frame synchronization establishment at the equipment at the office. Then, the equipment transmits a loopback control signal to the NT1 by using control bits out of the downstream subscriber line frame.

The circuit 115 of the NT1 detects the control signal, transmits an SW1 driving signal to the SW1, and closes a loop for loopback by turning on the switch.

When the loop is formed, the circuit 115 transmits the indication signal for loopback to the equipment at the office by using control bits out of the subscriber line frame. By receiving the indication signal, the equipment at the office recognizes the completion of loop formation, and measures an error bit rate by using the loopback path.

In the sequence above mentioned, when either the detector 16 or the transmitter 17 fails, the NT1 cannot notify the equipment at the office of a call origination even if it has received a call origination test control signal from the equipment. Therefore, a failure at the NT1 can be detected by the equipment at the office.

When the power feeder 18 fails, as the detector 16 is supplied with power from the output a of the circuit 18, even if the NT1 receives a call origination control signal from the equipment at the office, the NT1 remains suspended. As a result, the equipment can detects an abnormality of the NT1. The similar effect may be achieved by constructing the unit in a manner that the transmitter 17 is operated by the output a of the power feeder 18.

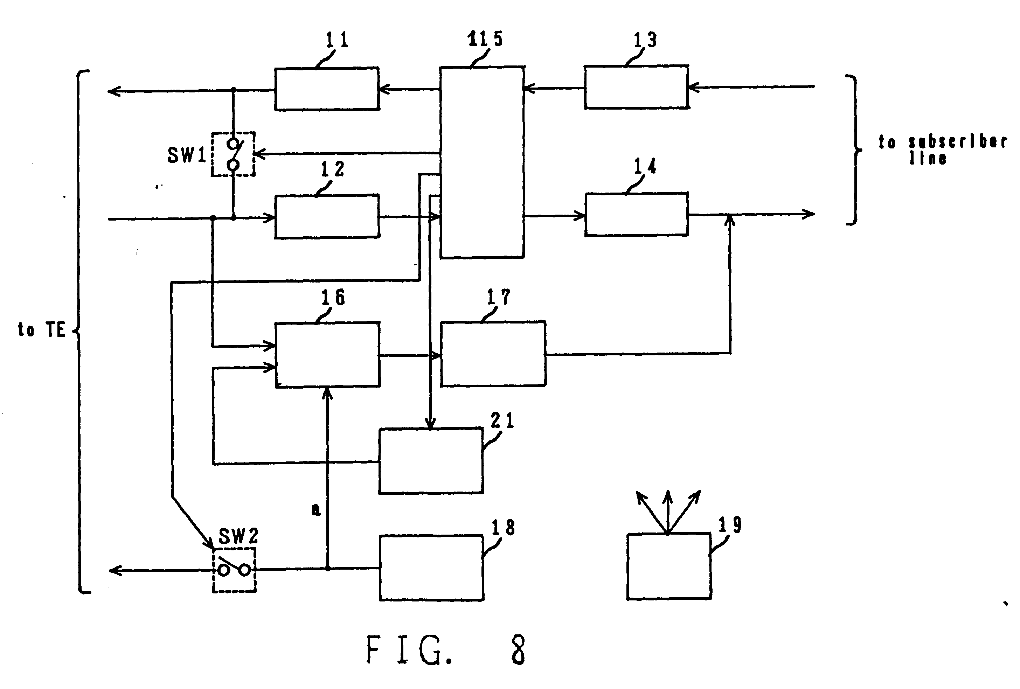

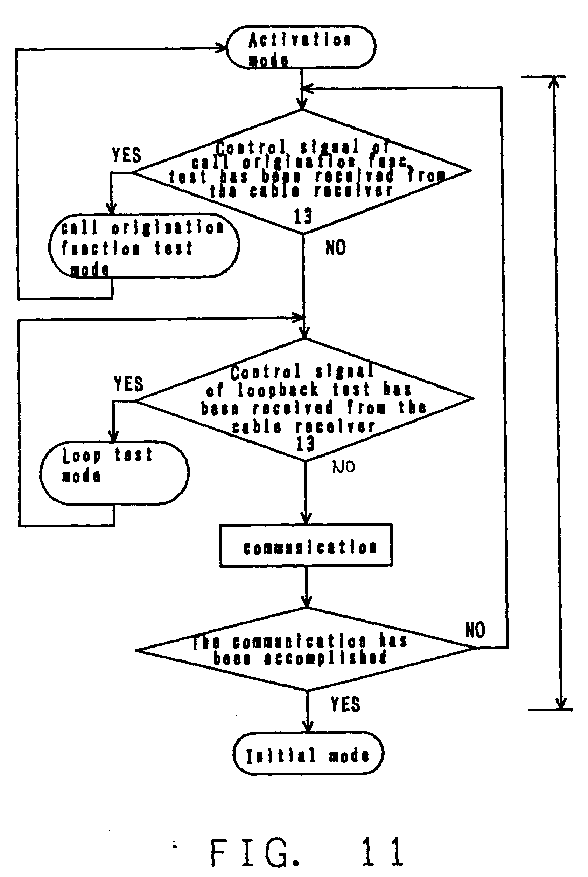

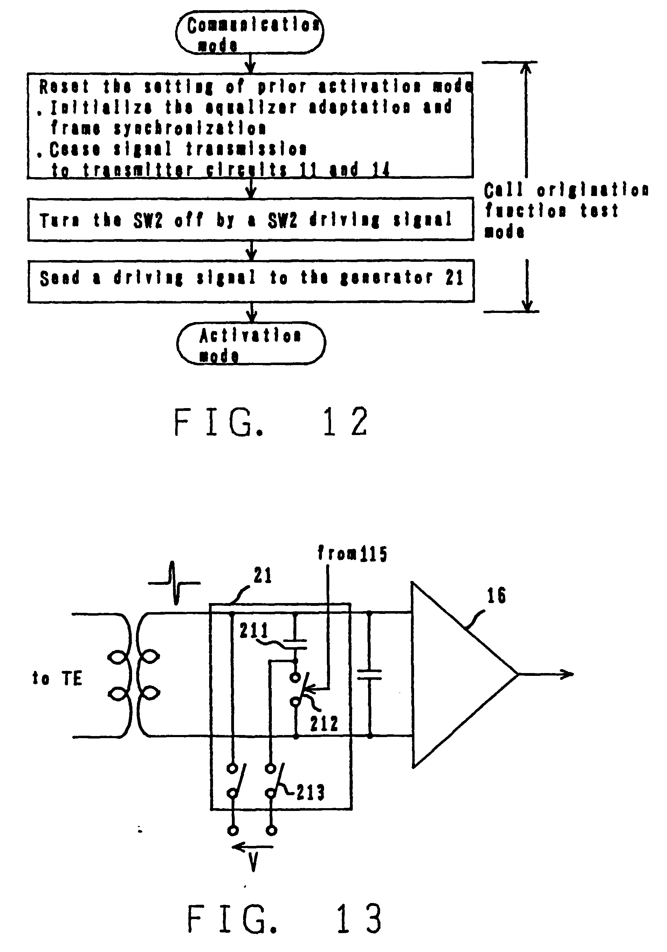

The operation of the circuit termination 115 will now be described. The circuit 115 has the fifth operation mode or a call origination function test mode in addition to the four modes of the initial activation, communication and loopback test. FIG. 10 shows the relation among those modes. FIG. 11 shows the operation flow in the communication mode while FIG. 12 shows the operation flow in the call origination function test mode. The three modes of the initial activation and loopback test are identical to those in the prior art. The other two modes of activation and loopback test are respectively shown in FIGs. 5 and 7.

The call origination function test is in the operation mode to which the circuit is shifted from the communication mode when it receives a call origination function test control signal from the receiver 13, and where it resets the mode to the activation mode, turns off the switch SW2 and transmits a driving signal to the generator 21. When the call origination function mode ends, the circuit 115 enters the activation mode.

In the operation flow shown in FIG. 9, an example is shown to first transmit a pseudo-call origination signal to the equipment at the telephone office and then to execute the loopback test, which constitutes an essential part of this invention. As shown in FIG. 11, it may execute a call origination function test mode alone when it receives a call origination function test control signal, and then execute the loopback test alone when it receives the loopback control signal. Therefore, when the tests are continuously conducted for an NT1 loopback tests alone may be conducted at the second test and thereafter without generating pseudo-call origination transmission for each time.

FIG. 13 shows an embodiment of a call origination signal generator together with a call origination signal detector.

The detector 16 is connected to the terminal equipment via a transformer and receives as input call origination signal in pulses from the terminal equipment. The detector 16 is a circuit which is used to detect pulses power, and if voltage pulses are given to an input thereof from outside, it recognizes them as a call origination signal. In the embodiment shown in FIG. 13, a voltage V (e.g. V = 5 volts) is applied at a capacitor 211 by closing a switch 213 within a predetermined period, and the capacitor 211 is connected to an input of the detector 16 by turning on the switch 212 by a driving signal from the circuit termination 15. Changes in voltage caused by discharging of the capacitor 211 is detected as a call origination. signal by the detector 16. If the voltage V is supplied from the feeder 18, the operation of the circuit may be checked simultaneously.

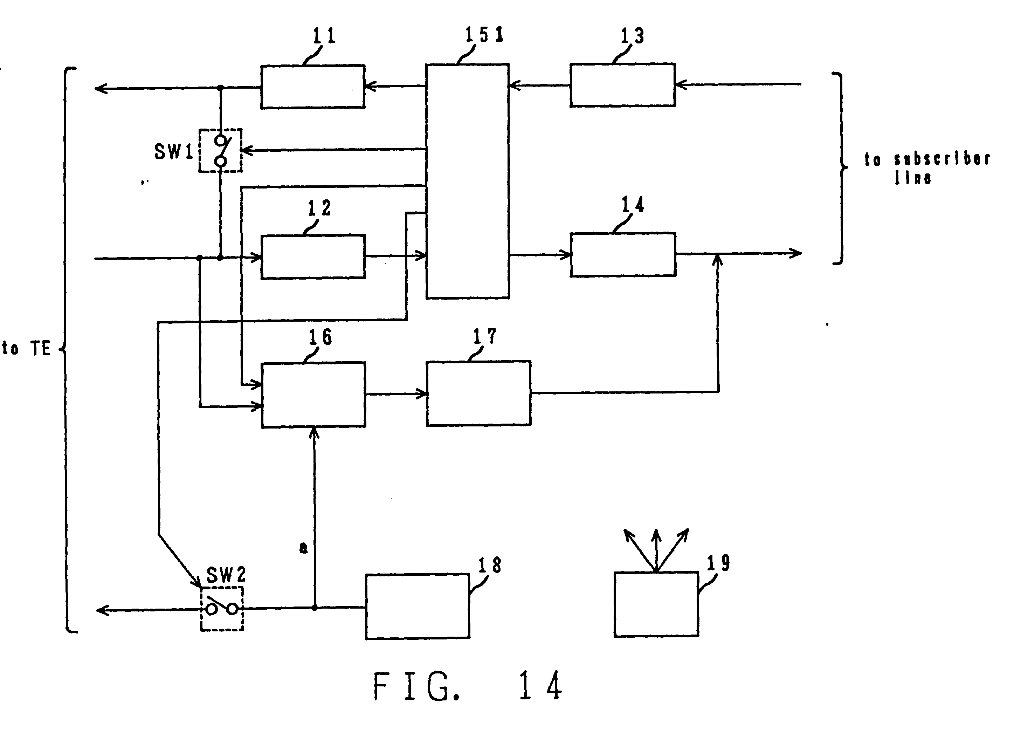

FIG. 14 is a block diagram to show the second embodiment of this invention NT1.

The second embodiment differs from the first one in that it outputs a call origination signal directly from the circuit termination 151 instead of employing the generator 21 used in the first embodiment. The second embodiment is simpler in the structure than the first one.

The circuit termination 151 generally comprises ICs which easily allow an addition of extra functions for outputting a call origination signal. The activation sequence at the loopback test and the operation modes of this embodiment are identical to those in the first embodiment.

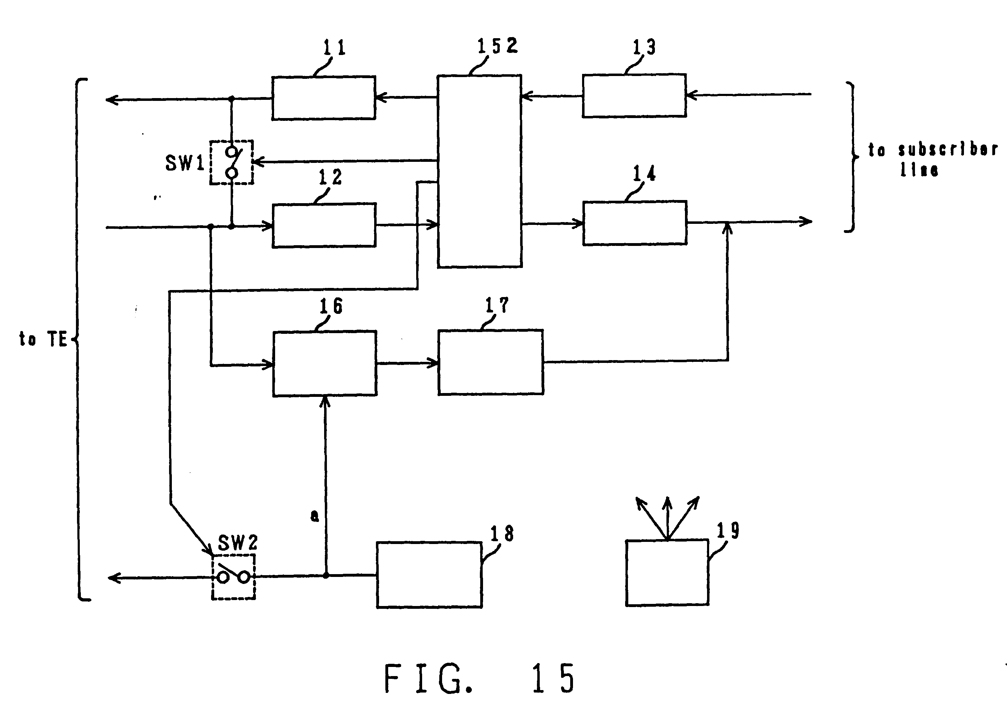

FIG. 15 is a block diagram to show the third embodiment of this invention NT1.

The circuit structure in the third embodiment is further simplified as it can execute loopback tests without using the call origination signal generator 21 used in the first embodiment.

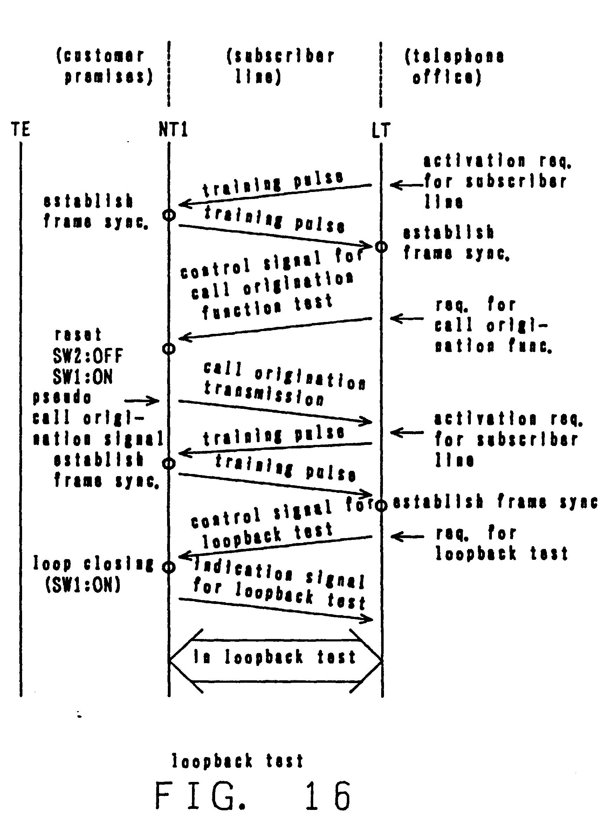

FIG. 16 shows the activation sequence at the loopback test in this embodiment which differs from the first embodiment shown in FIG. 9 in the operation to be taken when it receives a call origination function test control signal from the equipment at the office.

More particularly, this embodiment temporarily resets the whole circuits of the NT1 after receiving the call origination function test control signal, turns off the switch SW2 and turns on the switch SW1. Then the circuit termination 152 outputs a call origination signal which is supplied to the call origination signal detector 16 via the transmitter 11 and the switch SW1. The sequence in the subsequent procedure is identical to those in the first embodiment.

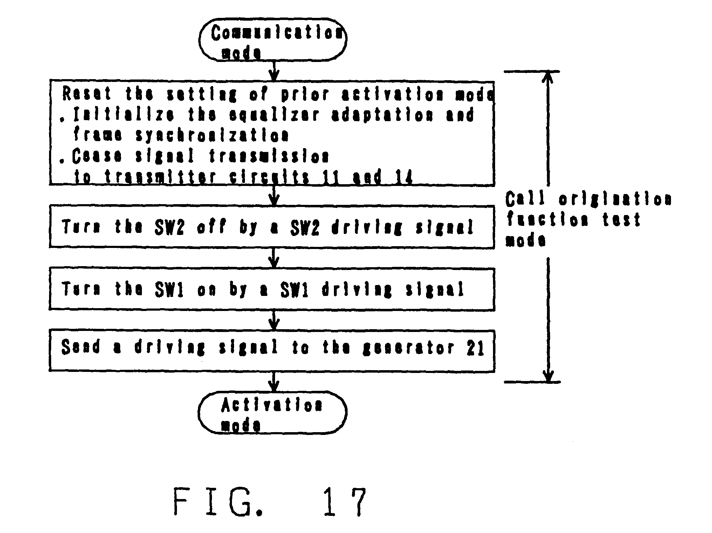

FIG. 17 shows the operation flow in the call origination function test mode at the circuit termination to execute the activation sequence. The flow differs from the first embodiment in that it outputs an SW1 driving signal after having outputted an SW2 driving signal. Other flow and the operation modes than the call origination function test mode are identical to those in the first embodiment.

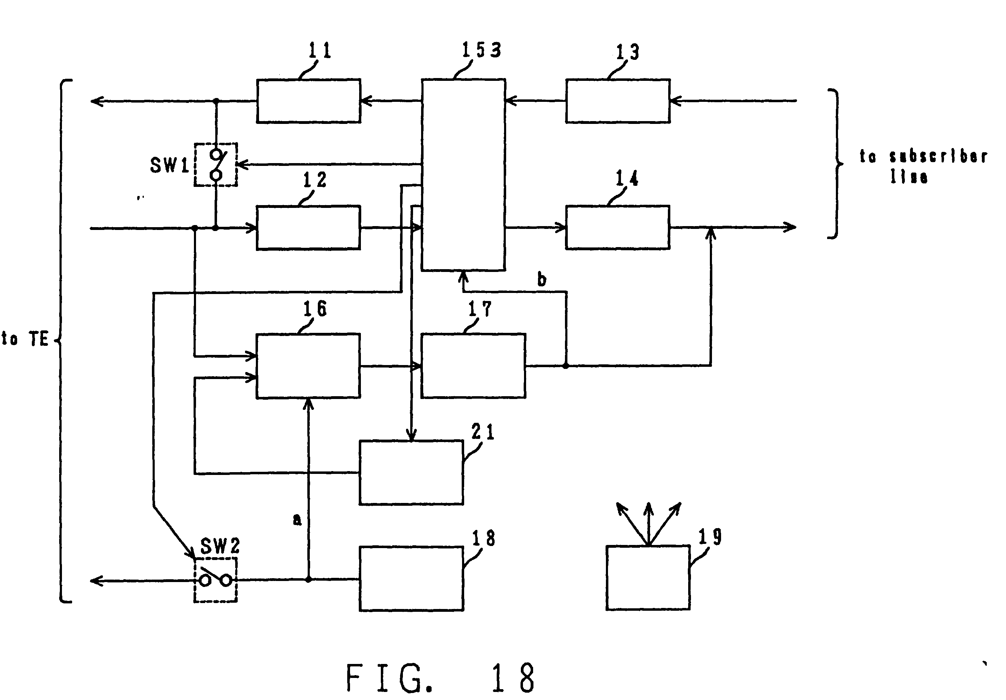

FIG. 18 is a block diagram to show the fourth embodiment NT1 according to this invention.

This embodiment differs from the first embodiment in that the output b of the call origination transmitter 17 is supplied to the circuit termination 153.

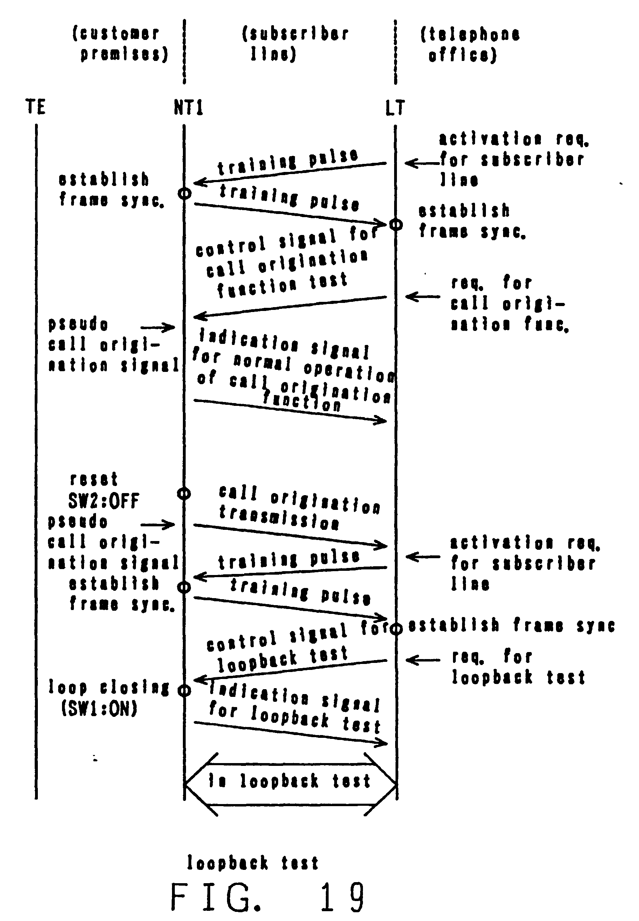

FIG. 19 shows an activation sequence at the loop-back test in this embodiment which differs from the sequence shown in FIG. 9 by the operation to be taken upon receipt of a call origination function test control signal from the equipment at the office.

More specifically, when it receives a call origination function test control signal, it feeds the call origination signal from the generator 21 to the detector 16 instead of resetting the NT1. As a result, the circuit 153 can transmit a signal indicating that the result of the call origination test was good to the equipment at the office using status indication bits at the allocated position within the upstream subscriber line frame after a call origination signal is outputted at the output b of the transmitter 17. The equipment at the office learns by the above procedure that all the functions of the detector 16 and of transmitter 17 which operate when activated by an incoming call and of the power feeder 18 which supplies power to the terminal equipment are normal. Then, all the circuits of the NT1 are reset, the switch SW2 is turned off, and a call originations signal is fed from the generator 21 to the detector 16. The subsequent sequence is identical to those in the first embodiment.

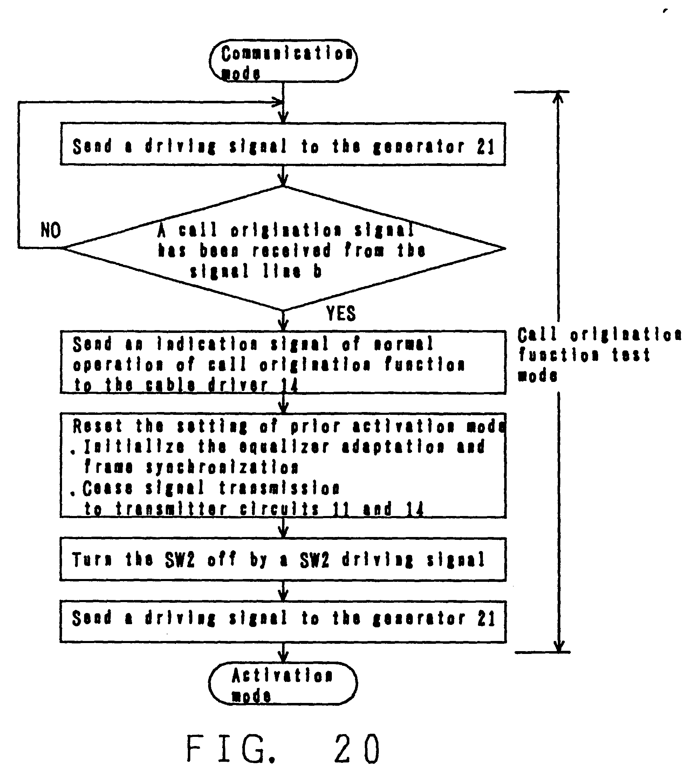

FIG. 20 shows the operation flow of the circuit termination in the call origination function test mode for executing the sequence. It differs from the first embodiment in that the transmission of a driving signal to the generator 21 and the receipt of a call origination transmissions signal from the line b are verified, but other flow and operation modes than the call origination test mode are identical to those in the first embodiment.

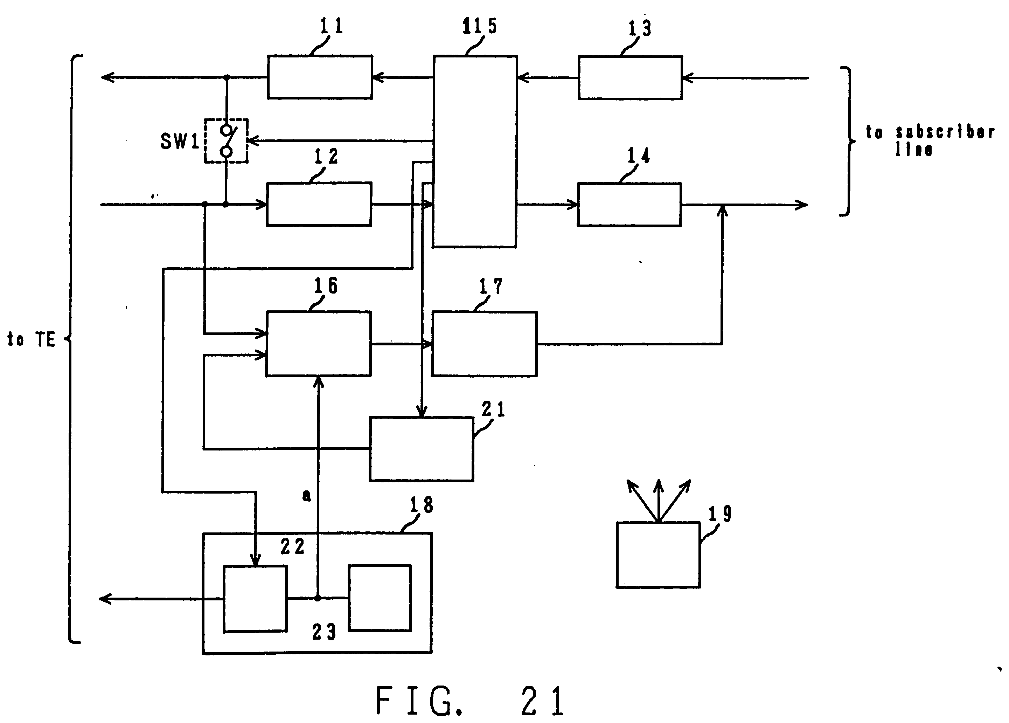

FIG. 21 is a block diagram to show the fifth embodiment of the NT1 according to this invention.

A power feeder circuit such as 18 is provided with a protector 22 for short circuit which protects the feeder when the output is short-circuited and a circuit block for power feeding 23 which generates power. The protector 22 can electrically diconnect the power output.

This embodiment is simplified in the circuit structure by omitting the switch SW2 used in the first embodiment. More particularly, the protector 22 is controlled by the control signal of power feeder disconnection from the circuit termination 115. The activation sequence is identical to the one in the first embodiment.

In the above embodiments, description has been made for the case where the operation of the power feeder 18 is verified by the voltage at the output a. However, this invention may be realized by structuring the circuit so that a load is inserted at the output a for testing power. In this case, it can detect a failure which cuts the power even if the output voltage from the circuit 18 remains within the normal scope.

As is described in detail in the foregoing statement, this invention NT1 first verifies if the circuits which should operate at the time of activation by an incoming call from the terminal euipment and a power feeder which supplies power to the equipment are operating normally or not and then executes a loopback test. This allows the NT1 according to this invention to test all the functions thereof including those of activation by an incoming call and of power feeder simply by conducting a loopback test.

## Claims

1. Network termination equipment, for an integrated services digital network, including means (11 to 17, SW1) for providing a connection route between terminal equipment and line equipment that is capable of instructing the network termination equipment to execute a test, including a loopback test, on the connection route, the network termination equipment including call origination alert means (16,17) which, in operation, alerts the line equipment to a call origination signal from the terminal equipment, characterised in that the network termination equipment includes call origination signal generator means (21) for triggering the call origination alert means (16,17) and includes circuit termination means (115) which is capable of responding initially to an instruction from the line equipment to test the connection route by causing the call origination signal generator means (21) to apply a signal to the call origination alert means (16,17) in order to test the call origination alert means (16,17).

2. Network termination equipment as claimed in claim 1, wherein the call origination signal generator means is included within modified circuit termination means (151) which is capable of responding initially to an instruction from the line equipment to test the connection route by causing the call origination signal generator means to apply a signal to the call origination alert means (16,17) in order to test the call origination alert means (16,17).

3. Network termination equipment as claimed in claim 2, wherein the modified circuit termination means (151) is connected directly to the call origination alert means (16,17).

4. Network termination equipment as claimed in claim 2, wherein an additionally modified circuit termination means (152) is connectible to the call origination alert means (16,17) by way of a transmitter circuit (11) belonging to the connection route and a switch (SW1) positioned for use in the loopback test.

5. Network termination equipment as claimed in claim 1, wherein the call origination alert means (16,17) is connected to a further-modified circuit termination means (153) which is capable of indicating the receipt of a signal from the call origination alert means (16,17) using status indication bits within a subscriber line frame.

6. Network termination equipment as claimed in any one of claims 1 to 5, wherein the call origination alert means (16,17) is connected to be energised by a power feeder (18) used to energise the terminal equipment and an isolating switch (SW2) is included for disconnecting the power feeder (18) from the terminal equipment during testing of the connection route.

## Patentansprüche

1. Netzabschlußanordnung für ein digitales serviceintegrierendes Netz, einschließlich Mitteln (11 bis 17, SW1) für das Bereitstellen einer Verbindungsstrecke zwischen einer Terminalanordnung und Leitungsanordnung, welche in der Lage sind, die Netzabschlußanordnung anzuweisen, einen Test einschließlich eines Rückschleifentests bezüglich der Verbindungsstrecke auszuführen, wobei die Netzabschlußanordnung Anrufursprungswarnmittel (16,17) umfaßt, die im Betrieb die Leitungsanordnung auf ein Anrufursprungssignal von der Terminalanordnung aufmerksam macht, dadurch gekennzeichnet, daß die Netzabschlußanordnung Anrufursprungssignalgeneratormittel (21) umfaßt für das Triggern der Anrufursprungswarnmittel (16,17), und Schaltungsabschlußmittel (115) umfaßt, die in der Lage sind, anfänglich auf einen Befehl von der Leitungsanordnung die Verbindungsstrecke zu testen, reagiert durch Veranlassen der Anrufursprungssignalgeneratormittel (21), ein Signal an die Anrufursprungswarnmittel (16,17) anzulegen, um die Anrufursprungswarnmittel (16,17) zu testen.

2. Netzabschlußanordnung nach Anspruch 1, bei der das Anrufursprungssignalgeneratormittel innerhalb modifizierter Schaltungsabschlußmittel (151) enthalten ist, welches in der Lage ist, anfänglich auf einen Befehl von der Leitungsanordnung die Verbindungsstrecke zu testen, reagiert durch Veranlassen des Anrufursprungssignalgeneratormittels, ein Signal an die Anrufursprungswarnmittel (16,17) anzulegen, um die Anrufursprungswarnmittel (16,17) zu testen.

3. Netzabschlußanordnung nach Anspruch 2, bei der das modifizierte Schaltungsabschlußmittel (151) direkt mit den Anrufursprungswarnmitteln (16,17) verbunden ist.

4. Netzabschlußanordnung nach Anspruch 2, bei der ein zusätzlich modifiziertes Schaltungsabschlußmittel (152) mit den Anrufursprungswarnmitteln (16,17) über eine Senderschaltung (11) verbindbar ist, die zu der Verbindungsstrecke gehört, und über einen Schalter (SW1), der für die Anwendung in dem Rückschleifentest positioniert ist.

5. Netzabschlußanordnung nach Anspruch 1, bei der das Anrufursprungswarnmittel (16,17) mit einem weiter modifizierten Schaltungsabschlußmittel (153) verbunden ist, welches in der Lage ist, den Empfang eines Signals von dem Anrufursprungswarnmittel (16,17) anzuzeigen unter Verwendung von Statusanzeigebits innerhalb eines Teilnehmerleitungsrahmens.

6. Netzabschlußanordnung nach einem der Ansprüche 1 bis 5, bei der das Anrufursprungswarnmittel (16,17) angeschlossen ist, um durch eine Leistungsquelle (18) erregt zu werden, die verwendet wird, um die Abschlußanordnung zu speisen, und ein Isolationsschalter (SW2) vorgesehen ist, um die Leistungsspeisequelle (18) von der Abschlußanordnung während des Testens der Verbindungsstrecke zu trennen.

## Revendications

1. Équipement terminal de réseau, pour réseau numérique à intégration de service, incluant des moyens (11 à 17, SW1) servant à fournir une voie de connexion entre l'équipement terminal et l'équipement de ligne, capables de requérir de l'équipement terminal de réseau qu'il réalise un test, y compris un test en boucle, de la voie de connexion, où l'équipement terminal de réseau inclut des moyens (16,17) de notification d'appel, ces moyens notifiant, en cours d'utilisation, l'équipement de ligne qu'un appel a été placé à partir de l'équipement terminal, caractérisé en ce que l'équipement terminal de réseau inclut des moyens (21) d'émission de signaux d'appel servant à déclencher les moyens (16,17) de notification d'appel, et en ce qu'il inclut des moyens de fermeture de circuit (115) qui sont capables de répondre initialement à une requête de la part de l'équipement de ligne de tester la voie de connexion, en faisant que les moyens (21) d'émission de signaux d'appel émettent un signal en direction des moyens (16,17) de notification d'appel, afin de tester les moyens (16,17) de notification d'appel.

2. Équipement terminal de réseau selon la revendication 1, dans lequel les moyens d'émission de signaux d'appel sont inclus dans des moyens (151) de fermeture de circuit modifiés, qui sont capables de répondre initialement à une requête de la part de l'équipement de ligne de tester la voie de connexion, en faisant que les moyens d'émission de signaux d'appel émettent un signal en direction des moyens (16,17) de notification d'appel, afin de tester les moyens (16,17) de notification d'appel.

3. Équipement terminal de réseau selon la revendication 2, dans lequel les moyens (151) de fermeture de circuit modifiés sont connectés directement aux moyens (16,17) de notification d'appel.

4. Équipement terminal de réseau selon la revendication 2, dans lequel des moyens (152) de fermeture de circuit, modifiés encore plus, peuvent être connectés aux moyens (16,17) de notification d'appel par l'intermédiaire d'un circuit de transmission (11) appartenant à la voie de connexion, et d'un interrupteur (SW1) placé de façon à pouvoir être utilisé au cours du test de boucle.

5. Équipement terminal de réseau selon la revendication 1, dans lequel les moyens (16,17) de notification d'appel sont connectés à des moyens (153) de fermeture de circuit, modifiés encore plus, qui sont capables d'indiquer réception d'un signal en provenance des moyens (16,17) de notification d'appel, en utilisant des bits d'indication d'état au sein de la trame de ligne d'abonné.

6. Équipement terminal de réseau selon l'une quelconque des revendications 1 à 5, dans lequel les moyens (16,17) de notification d'appel sont connectés, aux fins d'alimentation en énergie, à un générateur (18) servant à alimenter en énergie l'équipement terminal, et dans lequel on a inclus un interrupteur d'isolement (SW2) servant à déconnecter le générateur (18) de l'équipement terminal pendant qu'on teste la voie de connexion.
